# EUROPEAN PATENT APPLICATION

(11) **EP 4 546 688 A1**
(43) Date of publication of application: **30.04.2025**
(21) Application number: 22947324.4
(22) Date of filing: 23.06.2022
(51) Int. Cl.: H04L 5/00

(54) **TCI STATE INDICATION METHOD AND APPARATUS, DEVICE, AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/100808
(87) International publication number: WO 2023/245553

(57) **Abstract**

A TCI state indication method and apparatus, a device, and a medium, relating to the technical field of communications. The method is executed by a terminal (10), and comprises: receiving first indication information (220), the first indication information being used for indicating a first TCI state, the first TCI state comprising N TCI states, and the TCI states comprising joint TCI states and/or uplink TCI states, wherein N is an integer greater than 1; and receiving second indication information (240), the second indication information being used for indicating a second TCI state used in the process of transmitting a first physical uplink shared channel (PUSCH), and the second TCI state comprising M TCI states, wherein the M TCI states are a subset of the N TCI states, and M is a positive integer not greater than N. According to the method, by providing additional indication information to a PUSCH, the flexibility of PUSCH transmission is improved.

## Description

### TECHNICAL FIELD

The present disclosure generally relates to a field of communication technology, and more particularly to a method and an apparatus for indicating a transmission configuration indication (TCI) state, a device and a medium.

### BACKGROUND

In the field of communication technology, in order to reduce a signaling overhead, a unified transmission configuration indicator (unified TCI state) is introduced for use. For example, if a base station indicates a unified TCI state for downlink, the TCI state may be applicable to a physical downlink shared channel (PDSCH), a physical downlink control channel (PDCCH) and some downlink reference signals of a terminal. If the base station indicates a unified TCI state for uplink, the TCI state may be applicable to a physical uplink shared channel (PUSCH), a physical uplink control channel (PUCCH) and some uplink reference signals of the terminal.

In the related art, the unified TCI state may be separately indicated for downlink and uplink, or be indicated jointly for downlink and uplink. That is, if the base station indicates a TCI state for downlink, the TCI state may be applicable to the PDSCH, the PDCCH, and some channel state information reference signals (CSI-RSs) of the terminal. If the base station indicates a TCI state for uplink, the TCI state may be applicable to the PUSCH, the PUCCH, and some sounding reference signals (SRSs) of the terminal. If the base station indicates a joint TCI state, the joint TCI state may be applicable to both an uplink channel/reference signal and a downlink channel/reference signal.

However, the related art is only applicable to a case of a single transmission reception point (S-TRP).

### SUMMARY

Embodiments of the present disclosure provide a method and an apparatus for indicating a TCI state, a device and a medium, which may flexibly indicate a TCI state used by a PUSCH when performing a multi transmission reception point (M-TRP) transmission, and may realize a dynamic switching of the M-TRP transmission and an S-TRP transmission of the PUSCH. The technical solution will be described as follows.

According to a first aspect of the present disclosure, a method for indicating a TCI state is provided, which is performed by a terminal and includes: receiving first indication information, in which the first indication information is configured to indicate a first TCI state, the first TCI state includes N TCI states, and the TCI state includes a joint TCI state and/or an uplink TCI state, in which N is an integer greater than 1; and receiving second indication information, in which the second indication information is configured to indicate a second TCI state used in a case that a first physical uplink shared channel (PUSCH) is transmitted, and the second TCI state includes M TCI states. The M TCI states are a subset of the N TCI states, and M is a positive integer not greater than N.

According to a second aspect of the present disclosure, a method for indicating a TCI state is provided, which is performed by an access network device and includes: sending first indication information, in which the first indication information is configured to indicate a first TCI state, the first TCI state includes N TCI states, and the TCI state includes a joint TCI state and/or an uplink TCI state, in which N is an integer greater than 1; and sending second indication information, in which the second indication information is configured to indicate a second TCI state used in a case that a first physical uplink shared channel (PUSCH) is transmitted, and the second TCI state includes M TCI states. The M TCI states are a subset of the N TCI states, and M is a positive integer not greater than N.

According to a third aspect of the present disclosure, an apparatus for indicating a TCI state is provided, which includes: a first receiving module configured to receive first indication information, in which the first indication information is configured to indicate a first TCI state, the first TCI state includes N TCI states, and the TCI state includes a joint TCI state and/or an uplink TCI state, in which N is an integer greater than 1; and a second receiving module configured to receive second indication information, in which the second indication information is configured to indicate a second TCI state used in a case that a first physical uplink shared channel (PUSCH) is transmitted, and the second TCI state includes M TCI states. The M TCI states are a subset of the N TCI states, and M is a positive integer not greater than N.

According to a fourth aspect of the present disclosure, an apparatus for indicating a TCI state is provided, which includes: a first sending module configured to send first indication information, in which the first indication information is configured to indicate a first TCI state, the first TCI state includes N TCI states, and the TCI state includes a joint TCI state and/or an uplink TCI state, in which N is an integer greater than 1; and a second sending module configured to send second indication information, in which the second indication information is configured to indicate a second TCI state used in a case that a first physical uplink shared channel (PUSCH) is transmitted, and the second TCI state includes M TCI states. The M TCI states are a subset of the N TCI states, and M is a positive integer not greater than N.

According to a fifth aspect of embodiments of the present disclosure, a terminal is provided, including: a processor; a transceiver connected to the processor; and a memory used to store instructions executable by the processor, in which the processor is configured to load and execute the executable instructions to cause the terminal to implement the method for indicating the TCI state according to any one of the above aspects.

According to a sixth aspect of embodiments of the present disclosure, an access network device is provided, including: a processor; a transceiver connected to the processor; and a memory used to store instructions executable by the processor, in which the processor is configured to load and execute the executable instructions to cause the access network device to implement the method for indicating the TCI state according to any one of the above aspects.

According to a seventh aspect of embodiments of the present disclosure, a chip is provided, and a communication device equipped with the chip is configured to implement the method for indicating the TCI state according to any one of the above aspects.

According to an eighth aspect of embodiments of the present disclosure, a computer-readable storage medium is provided, storing at least one instruction, at least one program, a code set or an instruction set stored thereon, in which the at least one instruction, the at least one program, the code set or the instruction set is loaded and executed by a processor to cause a communication device to implement the above method for indicating the TCI state.

The technical solution provided by the embodiments of the present disclosure at least has the following beneficial effects.

This solution may realize a dynamic switching between the M-TRP transmission and the S-TRP transmission of the PUSCH via the second indication information during the M-TRP transmission, so as to improve a transmission flexibility of the PUSCH.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic diagram of a communication system according to an illustrative embodiment.
FIG. 2 is a flow chart of a method for indicating a TCI state according to an illustrative embodiment.
FIG. 3 is a flow chart of a method for indicating a TCI state according to an illustrative embodiment.
FIG. 4 is a block diagram of an apparatus for indicating a TCI state according to an illustrative embodiment.
FIG. 5 is a block diagram of an apparatus for indicating a TCI state according to an illustrative embodiment.
FIG. 6 is a schematic diagram of a terminal according to an illustrative embodiment.
FIG. 7 is a schematic diagram of a network device according to an illustrative embodiment.

### DETAILED DESCRIPTION

Reference will now be made in detail to illustrative embodiments, examples of which are illustrated in the accompanying drawings. When the following description refers to the accompanying drawings, the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the present disclosure as recited in the appended claims.

The network architecture and service scenarios described in embodiments of the present disclosure are intended to more clearly illustrate the technical solution of embodiments of the present disclosure, and do not constitute a limitation on the technical solution according to embodiments of the present disclosure. Those skilled in the art may understand that, with the evolution of the network architecture and the emergence of new service scenarios, the technical solution according to the embodiments of the present disclosure is also applicable to similar technical problems.

First, several terms according to the embodiments of the present disclosure are briefly introduced.

TCI state: it is used to inform a terminal that quasi co-location (QCL) information or a spatial reception parameter (spatial Rx parameter) used when receiving a PDCCH/PDSCH and/or a DMRS thereof are the same as those used when receiving which reference signal (a synchronization signal block (SSB) or a channel state information reference signal (CSI-RS)) sent by a base station; or inform the terminal that QCL information or spatial relationship information or a spatial filter used when sending a PUCCH/PUSCH and/or a DMRS thereof are the same as those used when sending which reference signal (such as a SRS or a CSI-RS).

Unified TCI state: if a base station indicates a unified TCI state for downlink, the TCI state may be applicable to a PDSCH, a PDCCH and some downlink reference signals of a terminal; if the base station indicates a unified TCI state for uplink, the TCI state may be applicable to indicate a PUSCH, a PUCCH and some uplink reference signals of the terminal. At present, the unified TCI state may adopt a separate indication of a separate uplink TCI state and a separate downlink TCI state, or a joint indication of an uplink-downlink joint TCI state.

The separate uplink TCI state is applicable to an uplink channel and/or signal, the separate downlink TCI state is applicable to a downlink channel and/or signal, and the joint TCI state is applicable to both the uplink channel and/or signal and the downlink channel and/or signal.

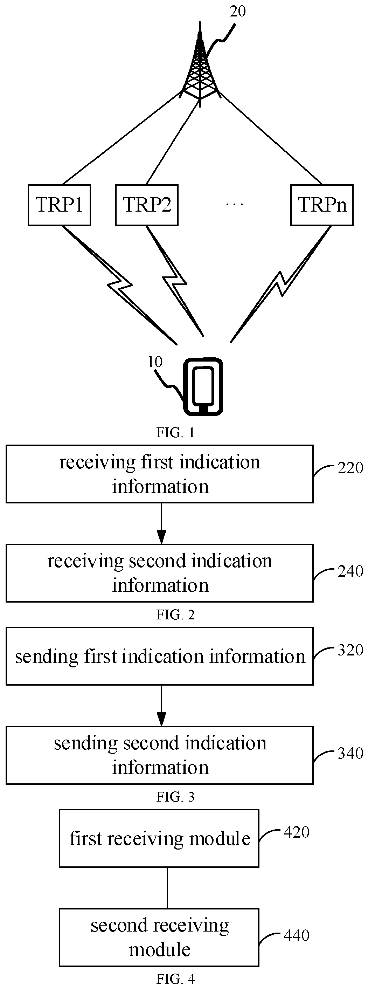

FIG. 1 shows a schematic diagram of a communication system according to an embodiment of the present disclosure. The communication system may include a terminal 10 and an access network device 20.

A plurality of terminals 10 usually may be provided, and one or more terminals 10 may be distributed in a cell managed by each access network device 20. The terminal 10 may include a variety of handheld devices, vehicle-mounted devices, wearable devices, computing devices or other processing devices connected to wireless modems, which have a wireless communication function, and various forms of user equipment (UE), mobile stations (MSs), etc. For a convenient description, the devices mentioned above in embodiments of the present disclosure are collectively referred to as a terminal.

The access network device 20 is an apparatus deployed in an access network that provides a wireless communication function for the terminal 10. The access network device 20 may include various forms of macro base stations, micro base stations, relay stations, and access points. In systems adopting different wireless access technologies, a name of a device that has the function of the access network device may be different, such as gNodeB or gNB in the 5G NR system. As the communication technology evolves, the name "access network device" may change. For a convenient description, in the embodiments of the present disclosure, the above apparatuses that provide the wireless communication function for the terminal 10 are collectively referred to as an access network device. A connection may be established between the access network device 20 and the terminal 10 via an air interface for communication, including a signaling interaction and a data interaction. A plurality of access network devices 20 may be provided, and two adjacent access network devices 20 may also communicate with each other in a wired or wireless manner. The terminal 10 may switch between different access network devices 20, that is, establishing a connection with different access network devices 20.

Optionally, the access network device 20 is provided with at least two TRPs; or at least two access network devices 20 are provided, each of which is provided with at least one TRP, that is, the at least two access network devices 20 are provided with at least two TRPs. That is, the at least two TRPs may come from a same cell or different cells. A communication connection is established between the terminal 10 and the at least two TRPs by a downlink TCI state and/or an uplink TCI state. Optionally, different TRPs use different downlink TCI states and/or uplink TCI states. For example, the terminal 10 determines a downlink TCI state required to receive the PDCCH according to a joint TCI state or the downlink TCI state; and the terminal 10 determines an uplink TCI state required to send the PUSCH according to the joint TCI state or the uplink TCI state.

The "5G NR system" in the embodiments of the present disclosure may also be referred to as a 5G system or an NR system, which may be understood by those skilled in the art. The technical solution in the embodiments of the present disclosure may be applicable to the 5G NR system, and may also be applicable to a subsequent evolution system of the 5G NR system.

In a new radio (NR) technology, especially when a communication frequency band is in frequency range 2, since a high-frequency channel attenuates in a fast speed, it is required to use beam-based transmission and reception to ensure a coverage area.

FIG. 2 shows a flow chart of a method for indicating a TCI state according to an embodiment of the present disclosure. The method may be performed by the terminal in the communication system shown in FIG. 1. The method includes the following steps.

In step 220, first indication information is received.

The terminal receives the first indication information sent by the access network device.

The first indication information is configured to indicate a first TCI state, the first TCI state includes N TCI states, and the TCI state includes a joint TCI state and/or an uplink TCI state, in which N is an integer greater than 1. That is, the first indication information is configured to indicate information of a plurality of joint/uplink TCI states. That is, the first indication information is configured to indicate a unified TCI state of an uplink channel and/or signal. Each of the N TCI states may be the joint TCI state or the uplink TCI state.

In some embodiments, the first indication information is carried in a first medium access control control element (MAC CE), and the first MAC CE is configured to indicate the N TCI states. The N TCI states correspond to one code point in a TCI field of downlink control information (DCI). That is, the first indication information is only carried in the first MAC CE. Since the N TCI states indicated in the first MAC CE only correspond to one code point in the TCI field of the DCI, a base station does not need to send additional DCI to the terminal to indicate the code point, thereby saving a signaling overhead.

In some embodiments, the first indication information is carried in a second MAC CE and a first DCI, the second MAC CE is configured to indicate N TCI states corresponding to each of at least two code points in a TCI field of the first DCI, and the first DCI is configured to indicate one code point of the at least two code points. That is, both the second MAC CE and the first DCI are configured to indicate the first indication information. The second MAC CE indicates N TCI states corresponding to each of at least two code points in the TCI field of the first DCI. The first DCI is configured to indicate the code point, and then the N TCI states corresponding to the code point are obtained by querying the second MAC CE. In this case, the second MAC CE may indicate a plurality of sets of code point configurations, and each set of code point configurations corresponds to N TCI states. It should be noted that each code point corresponds to N TCI states, and a value of N corresponding to each code point may be the same or different.

In some embodiments, the first indication information further includes identification information (ID) corresponding to each TCI state, and the identification information includes a control resource set pool index (CORESETPoolIndex) or a CORESET group ID or an SS set group ID or a PDCCH group ID or a PUSCH group ID; or, the first indication information includes the N TCI states, and each of the N TCI states has a default mapping relationship with identification information.

That is, in an case, each of the N TCI states has the default mapping relationship with the identification information, and the first indication information does not need to additionally indicate a corresponding relationship between the TCI state and the identification information. In another case, no default mapping relationship is provided between the TCI state and the identification information, and thus the first indication information also includes the corresponding relationship between each TCI state and the identification information.

In step 240, second indication information is received.

The terminal receives the second indication information sent by the access network device.

The second indication information is configured to indicate a second TCI state used in a case that a first PUSCH is transmitted. The second TCI state includes M TCI states, the M TCI states are a subset of the N TCI states, and M is a positive integer not greater than N. That is, the M TCI states are the same as the N TCI states, or the M TCI states are a proper subset of the N TCI states; that is, the M TCI states are all or part of the N TCI states. Each of the M TCI states may be the joint TCI state or the uplink TCI state.

In some embodiments, the first PUSCH is configured with at least one of: a transmission scheme based on a frequency division multiplexing (FDM); a transmission scheme based on a time division multiplexing (TDM); demodulation reference signal (DMRS) ports of at least two code division multiplexing (CDM) groups; and a transmission scheme based on a single-frequency network (SFN).

Optionally, the transmission scheme based on the FDM refers to that frequency domain resources of n PUSCH occasions used for transmitting the PUSCH are different, and TCI states of the n PUSCH occasions are different. The scheme based on the FDM includes: FDM scheme A; or FDM scheme B. FDM scheme A refers to that the terminal uses different TCI states to transmit the PUSCH in one PUSCH occasion on non-overlapping frequency domain resources, in a case that the terminal is indicated with a plurality of TCI states. FDM scheme B refers to that the terminal uses different TCI states to respectively transmit the PUSCH in a plurality of PUSCH occasions on non-overlapping frequency domain resources, in a case that the terminal is indicated with a plurality of TCI states. In an illustrative case of FDM scheme B, the number of the TCI states and the number of the PUSCH occasions are both 2.

Optionally, the transmission scheme based on the TDM refers to that time domain resources of n PUSCH occasions used for transmitting the PUSCH are different, and TCI states of the n PUSCH occasions are different. The transmission scheme based on the TDM includes: repetition type A; or repetition type B. In repetition type A, different time domain units are at a same symbol position in different time slots. In repetition type B, one time slot may contain two time domain units, and one time domain unit may also occupy at least part of symbols in two time slots.

Optionally, DMRS ports for transmitting the PUSCH correspond to at least two CDM groups, and TCI states corresponding to the at least two CDM groups are different.

Optionally, the transmission scheme based on the SFN includes SFN scheme A or SFN scheme B. In the SFN scheme, a TCI state for transmitting the first PUSCH includes at least two TCI states, and each TCI state includes a joint TCI state or an uplink TCI state. The SFN transmission may be also dynamically switched to an S-TRP transmission in a case that a reception of the first PUSCH is configured as the transmission scheme based on the SFN. That is, in a case that the number of the TCI states is greater than 1, it is an SFN-based transmission, otherwise, it is dynamically switched to the S-TRP transmission. Optionally, time domain resources and frequency domain resources for transmitting the PUSCH are the same, and the demodulation reference signal (DMRS) ports for transmitting the PUSCH are the same.

In SFN scheme A, in a case that at least two TCI states are indicated, the terminal assumes that the DMRS ports for transmitting the PUSCH are quasi-co-located with reference signals corresponding to the at least two TCI states. In SFN scheme B, in a case that at least two TCI states are indicated, the terminal assumes that the DMRS ports for transmitting the PUSCH are quasi-co-located with reference signals corresponding to the at least two TCI states, other than quasi co-location parameters {Doppler shift, Doppler spread} of the second TCI state.

In some embodiments, the first PUSCH includes at least one of following types: a dynamic scheduled PUSCH; a configured grant type 1 PUSCH; and a configured grant type 2 PUSCH. All resources for the dynamical scheduled PUSCH are indicated by the DCI; all resources for the configured grant type 1 PUSCH are indicated by a radio resource control (RRC); and resources for the configured grant type 2 PUSCH are jointly indicated by the RRC and the DCI.

In some embodiments, the first PUSCH is configured with at least one of following configuration parameters: at least one sounding reference signal (SRS) resource set indicator; at least one SRS resource indicator; at least one field layer; at least one precoding information and number of layers; at least one transmitted precoding matrix indicator (TPMI); at least one SRS resource set; at least one pathloss reference signal; and at least one power control parameter set.

It should be noted that the number of the SRS resource set indicators is only one, but the SRS resource set indicator may indicate one or more SRS resource sets. A transmission state indicated by the SRS resource set indicator may be the S-TRP or an M-TRP.

For example, the number of the above configuration parameters other than the SRS resource set indicator is N, and N is a positive integer. This embodiment uses 2 configuration parameters as an example.

In some embodiments, in a case that M is equal to 1, that is, in the S-TRP transmission state, the second indication information indicates one configuration parameter corresponding to the above first PUSCH, that is, indicating that one TCI state corresponding to the configuration parameter of the N TCI states is used when the first PUSCH is transmitted. For example, in a case that the second indication information indicates that the configuration parameter corresponding to the first PUSCH is a first SRS resource set of two SRS resource sets, it indicates that a first TCI state of 2 TCI states indicated in the first indication information is used when the first PUSCH is transmitted. For example, in a case that the second indication information indicates that the configuration parameter corresponding to the first PUSCH is a first SRS resource indicator of two SRS resource indicators, it indicates that a first TCI state of 2 TCI states indicated in the first indication information is used when the first PUSCH is transmitted. For example, in a case that the second indication information indicates that the configuration parameter corresponding to the first PUSCH is a first field layer of two field layers, it indicates that a first TCI state of 2 TCI states indicated in the first indication information is used when the first PUSCH is transmitted. For example, in a case that the second indication information indicates that the configuration parameter corresponding to the first PUSCH is a first precoding information and number of layers of two precoding information and the two numbers of layers, it indicates that a first TCI state of 2 TCI states indicated in the first indication information is used when the first PUSCH is transmitted. For example, in a case that the second indication information indicates that the configuration parameter corresponding to the first PUSCH is a first TPMI of two TPMIs, it indicates that a first TCI state of 2 TCI states indicated in the first indication information is used when the first PUSCH is transmitted. For example, in a case that the second indication information indicates that the configuration parameter corresponding to the first PUSCH is a first pathloss reference signal of two pathloss reference signals, it indicates that a first TCI state of 2 TCI states indicated in the first indication information is used when the first PUSCH is transmitted. For example, in a case that the second indication information indicates that the configuration parameter corresponding to the first PUSCH is a first power control parameter set of two power control parameter sets, it indicates that a first TCI state of 2 TCI states indicated in the first indication information is used when the first PUSCH is transmitted. It should be noted that an i-th one here refers to an i-th parameter of the same type.

In some embodiments, in a case that M is greater than 1, that is, in the M-TRP transmission state, the second indication information indicates at least two configuration parameters corresponding to the above first PUSCH, that is, indicating that TCI states respectively corresponding to the at least two configuration parameters of the N TCI states are used in a case that the first PUSCH is transmitted. In a typical case, the number of the above configuration parameters is configured as two.

In some embodiments, different frequency domain resources of the first PUSCH correspond to different TCI states in a case that the first PUSCH is configured with the transmission scheme based on the FDM and M is greater than 1; different time domain resources of the first PUSCH correspond to different TCI states in a case that the first PUSCH is configured with the transmission scheme based on the TDM and M is greater than 1; DMRS ports of different CDM groups of the first PUSCH correspond to different TCI states in a case that the first PUSCH is configured with the DMRS ports of the at least two CDM groups and M is greater than 1; and DMRS ports of the first PUSCH correspond to the M TCI states in a case that the first PUSCH is configured with the transmission scheme based on the SFN and M is greater than 1.

That is, in the M-TRP transmission state, different time domain resources/frequency domain resources/DMRS ports of CDM groups correspond to different TCI states; or, in the SFN scheme, under the same time domain resources/frequency domain resources, the DMRS ports correspond to a plurality of TCI states.

In some embodiments, the second indication information is carried in a third MAC CE. The third MAC CE is the same as or different from an MAC CE where the first indication information is located. The MAC CE where the first indication information is located includes the first MAC CE or the second MAC CE. That is, the third MAC CE is the same as or different from the first MAC CE in a case that the first indication information is carried in the first MAC CE; or, the third MAC CE is the same as or different from the second MAC CE in a case that the first indication information is carried in the second MAC CE and the first DCI.

In some embodiments, the third MAC CE is configured to indicate both the N TCI states (content of the first indication information) and the M TCI states corresponding to the first PUSCH (content of the second indication information) in a case that the third MAC CE is the same as an MAC CE carrying the first indication information. In addition, the third MAC CE is further configured to indicate a corresponding relationship between identification information and the N TCI states (optional content of the first indication information) and/or indicate a corresponding relationship between identification information and the M TCI states (optional content of the second indication information). The identification information is the CORESETPoolIndex or the CORESET group ID or the SS set group ID or the PDCCH group ID or the PUSCH group ID. For example, the third MAC CE is a unified TCI state activation/deactivation MAC CE, and the third MAC CE is configured to indicate both the first indication information and the second indication information.

That is, in a case that the third MAC CE is the same as the MAC CE carrying the first indication information, information carried in the same MAC CE includes the content included in the first indication information and the content included in the second indication information. That is, the third MAC CE includes not only information related to indicating the N TCI state, but also information related to indicating the M TCI state.

The information related to the N TCI state includes at least one of the N TCI states and the identification information corresponding to each TCI state; and the information related to the M TCI state includes at least one of the M TCI states, the identification information or TCI state corresponding to each SS set or each CORESET, the identification information corresponding to the PUSCH, and the corresponding relationship between the identification information and the M TCI states. Information included in the third MAC CE is any combination of the above information related to the N TCI state and the above information related to the M TCI state.

In some embodiments, the third MAC CE indicates the M TCI states corresponding to at least one of the dynamic scheduled PUSCH, the configured grant type 1 PUSCH, and the configured grant type 2 PUSCH.

In some embodiments, the N TCI states have a corresponding relationship with at least one configuration parameter. In a case that the third MAC CE indicates an i-th configuration parameter in the at least one configuration parameter, it is determined that the M TCI states corresponding to the first PUSCH include a TCI state corresponding to the i-th configuration parameter; or, in a case that at least two configuration parameters are provided and the third MAC CE indicates the at least two configuration parameters, it is determined that the M TCI states corresponding to the first PUSCH include TCI states corresponding to the at least two configuration parameters, in which i is a positive integer not greater than N, and the at least one configuration parameter includes at least one of at least one SRS resource set indicator, at least one SRS resource indicator, at least one field layer, at least one precoding information and number of layers, at least one TPMI, at least one SRS resource set, at least one pathloss reference signal and at least one power control parameter set.

It should be noted that the number of the configuration parameter SRS resource set indicators is only one. That is, in the S-TRP transmission state, the number of all configuration parameters is one. In the M-TRP transmission state, the number of the SRS resource set indicators is 1, and a plurality of other configuration parameters other than the SRS resource set indicator is provided. However, the SRS resource set indicator may indicate one or more SRS resource sets. The transmission state indicated by the SRS resource set indicator may be the S-TRP or the M-TRP.

For example, for example, the number of the configuration parameters and the number of the TCI states are both two. In a case that the third MAC CE indicates a first one of the two configuration parameters, it means that a first one of the two TCI states is used; in a case that the third MAC CE indicates a second one of the two configuration parameters, it means that a second one of the two TCI states is used; and in a case that the MAC CE indicates the two configuration parameters, the two TCI states are used. In a case that the number of the configuration parameters is larger, the same procedure is repeated.

For example, the configuration parameters are two TPMIs. A first TPMI corresponds to the first one of the two TCI states, and a second TPMI corresponds to the second one of the two TCI states. In a case that the third MAC CE indicates the first TPMI, it means that the first one of the two TCI states is used; in a case that the third MAC CE indicates the second TPMI, it means that the second one of the two TCI states is used; and in a case that the MAC CE indicates the first TPMI and the second TPMI, the first one and the second one of the two TCI states are used. In a case that the number of the configuration parameters is larger, the same procedure is repeated.

For example, the configuration parameters are two SRS resource sets. A first SRS resource set corresponds to the first one of the two TCI states, and a second SRS resource set corresponds to the second one of the two TCI states. In a case that the third MAC CE indicates the first SRS resource set, it means that the first one of the two TCI states is used; in a case that the third MAC CE indicates the second SRS resource set, it means that the second one of the two TCI states is used; and in a case that the MAC CE indicates the first SRS resource set and the second SRS resource set, the first one and the second one of the two TCI states are used. In a case that the number of the configuration parameters is larger, the same procedure is repeated.

For example, the configuration parameters are two power control parameter sets. A first power control parameter set corresponds to the first one of the two TCI states, and a second power control parameter set corresponds to the second one of the two TCI states. In a case that the third MAC CE indicates the first power control parameter set, it means that the first one of the two TCI states is used; in a case that the third MAC CE indicates the second power control parameter set, it means that the second one of the two TCI states is used; and in a case that the MAC CE indicates the first power control parameter set and the second power control parameter set, the first one and the second one of the two TCI states are used. In a case that the number of the configuration parameters is larger, the same procedure is repeated.

For example, the configuration parameters are two pathloss reference signals. A first pathloss reference signal corresponds to the first one of the two TCI states, and a second pathloss reference signal corresponds to the second one of the two TCI states. In a case that the third MAC CE indicates the first pathloss reference signal, it means that the first one of the two TCI states is used; in a case that the third MAC CE indicates the second pathloss reference signal, it means that the second one of the two TCI states is used; and in a case that the MAC CE indicates the first pathloss reference signal and the second pathloss reference signal, the first one and the second one of the two TCI states are used. In a case that the number of the configuration parameters is larger, the same procedure is repeated.

In some embodiments, the second indication information is carried in a second DCI, and the second DCI is the same as or different from a DCI where the first indication information is located. That is, the second DCI and the first DCI may be the same or different in a case that the first indication information is carried in the second MAC CE and the first DCI.

For example, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with or without a downlink assignment, and the second DCI is an uplink DCI in a DCI format of 0_1 or 0_2; or, the first indication information is carried in a DCI in a DCI format of 1_1 or 1_2 with or without a downlink assignment, and the second DCI is a DCI in a DCI format other than 1_1 and 1_2.

For example, in a case that a DCI where the second indication information is located is a DCI without the downlink assignment, a field used by the second indication information in the DCI in the DCI format of 1_1 or 1_2 without the downlink assignment includes at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control (TPC) command for a scheduled PUCCH;
a second TPC command for a scheduled PUCCH;
a PUCCH resource indicator;
a timing indicator from a physical downlink shared channel (PDSCH) to an HARQ feedback;
a one-shot hybrid automatic repeat request acknowledgement (HARQ-ACK) request;
an enhanced type 3 codebook indicator;
a PDSCH group index;
a new feedback indicator;
the number of requested PDSCH groups;
an HARQ-ACK retransmission indicator;
an antenna port;
a sounding reference signal (SRS) request;
an SRS offset indicator;
code block group (CBG) transmission information;
CBG flushing out information (CBGFI);
a demodulation reference signal (DMRS) sequence initialization;
a priority indicator;
a channel access-cyclic prefix;
a minimum applicable scheduling offset indicator;
a secondary cell (SCell) dormancy indication;
a PDCCH monitoring adaptation indication;
a physical uplink control channel (PUCCH) cell indicator;
a redundancy version;
a TCI state indication field;
an enhanced TCI state indication field; and
a newly added TCI state indication field: a second TCI state indication field.

In another case, when the second DCI is the uplink DCI in the DCI format of 0_1 or 0_2, a field used by the second indication information in the uplink DCI in the DCI format of 0_1 or 0_2 includes at least one of:
an SRS resource set indicator; and
a TCI state indication field.

In some embodiments, the second indication information is in the SRS resource set indicator field of the uplink DCI in the DCI format of 0_1 or 0_2, and a value of N is 2, that is, two TCI states are provided. K repetitive resources corresponding to the first PUSCH use a first one of the two TCI states in a case that the SRS resource set indicator is a first value; or, K repetitive resources corresponding to the first PUSCH use a second one of the two TCI states in a case that the SRS resource set indicator is a second value; or, K repetitive resources corresponding to the first PUSCH use a first one and a second one of the two TCI states in a case that the SRS resource set indicator is a third value. K is an integer greater than 1.

Furthermore, in a case that the SRS resource set indicator is the third value, the K repetitive resources corresponding to the first PUSCH use the first one and the second one of the two TCI states based on a mapping manner, and the mapping manner is a cyclic mapping or a sequential mapping.

For example, a time domain repetition is taken as an example, a possible manner for indicating the TCI state is described. Since the SRS resource set indicator field may use 2 bits, that is, the SRS resource set indicator may have four values of 0, 1, 2, and 3. A first value includes a value of 0, a second value includes a value of 1, and a third value includes a value of 2 and/or a value of 3. The four values are respectively described in the following.
(1) In a case that a value of the SRS resource set indicator is 0, that is, the SRS resource set indicator is the first value, the K repetitive resources corresponding to the first PUSCH use the first one of the two TCI states. That is, all K consecutive time domain units (time slots or individual repetition units) use the first one of the two TCI states.
(2) In a case that a value of the SRS resource set indicator is 1, that is, the SRS resource set indicator is the second value, the K repetitive resources corresponding to the first PUSCH use the second TCI state. That is, all K consecutive time domain units (time slots or individual repetition units) use the second one of the two TCI states.
(3) In a case that a value of the SRS resource set indicator is 2, that is, the SRS resource set indicator is the third value, the K repetitive resources corresponding to the first PUSCH use the first TCI state and the second TCI state based on the mapping manner, and the mapping manner is the cyclic mapping or the sequential mapping. The mapping relationship is as follows.

K=2: a first time domain unit corresponds to the first one of the two TCI states, and a second time domain unit corresponds to the second one of the two TCI states.

K>2 and adopting a cyclic mapping manner: the first one of the two TCI states corresponds to first, third, fifth, etc. odd-numbered time domain units, and the second TCI state corresponds to second, fourth, sixth, etc. even-numbered time domain units.

K>2 and adopting a sequential mapping manner: the first one of the two TCI states corresponds to 4i+1th and 4i+2th time domain units, the second one of the two TCI states corresponds to 4i+3th and 4i+4th time domain units, and i is an integer greater than or equal to 0. For example, the first one of the two TCI states corresponds to 1st and 2nd time domain units, and the second one of the two TCI states corresponds to 3rd and 4th time domain units; then, the first one of the two TCI states corresponds to 5th and 6th time domain units, and the second one of the two TCI states corresponds to 7th and 8th time domain units, and so on.

(4) In a case that a value of the SRS resource set indicator is 3, that is, the SRS resource set indicator is the third value, the K repetitive resources corresponding to the first PUSCH use the first one and the second one of the two TCI states based on the mapping manner, and the mapping manner is the cyclic mapping or the sequential mapping. The mapping relationship is as follows.

K=2: a first time domain unit corresponds to the second one of the two TCI states, and a second time domain unit corresponds to the first one of the two TCI states.

K>2 and adopting a cyclic mapping manner: the first one of the two TCI states corresponds to second, fourth, sixth, etc. even-numbered time domain units, and the second one of the two TCI states corresponds to first, third, fifth, etc. odd-numbered time domain units.

K>2 and adopting a sequential mapping manner: the second one of the two TCI states corresponds to 4i+1th and 4i+2th time domain units, the first one of the two TCI states corresponds to 4i+3th and 4i+4th time domain units, and i is an integer greater than or equal to 0. For example, the second one of the two TCI states corresponds to 1st and 2nd time domain units, and the first one of the two TCI states corresponds to 3rd and 4th time domain units; then, the second one of the two TCI states corresponds to 5th and 6th time domain units, and the first one of the two TCI states corresponds to 7th and 8th time domain units, and so on.

It should be noted that, here, for example, the K repetitive resources are the time domain units, but not only limited to the time domain units. The time domain unit may be replaced by the frequency domain unit, or the CDM group corresponding to the DMRS port, and so on. The present disclosure does not impose any limitation on this.

It should be noted that, in a traditional method, no TCI state indication field is in the uplink DCI in the DCI format of 0_1 or 0_2. In order to indicate the second TCI state used in a case that the first PUSCH is transmitted, in some embodiments, a TCI state indication field may also be added to the uplink DCI in the DCI format of 0_1 or 0_2 to indicate the second indication information.

In some embodiments, the second indication information is in the SRS resource set indicator field in the uplink DCI in the DCI format of 0_1 or 0_2. The K repetitive resources corresponding to the first PUSCH use at least one TCI state of the N TCI states in a case that the SRS resource set indicator is an i-th value. N is an integer greater than 1.

Furthermore, in a case that the TCI states used by the above K repetitive resources include at least two TCI states of the N TCI states, the at least two TCI states are used based on a mapping manner, and the mapping manner is a cyclic mapping or a sequential mapping.

In some embodiments, without the downlink assignment in the DCI, the DCI has a following field configuration. Individual bits of a redundancy version (RV) field are set to "1", individual bits of a modulation and coding scheme (MCS) field are set to "1", and a new data indicator (NDI) is set to "0". In addition, individual bits of FDRA type 0 are set to "0"; or, individual bits of FDRA type 1 are set to "1"; or, individual bits of a dynamic switch field are set to "0".

In another case, that is, in a case that the second DCI is the DCI in the DCI format other than 1_1 and 1_2, a SS set type associated with the second DCI is a user equipment (UE) specific SS set or a common SS set.

In some embodiments, other possible cases of the positions of the first indication information and the second indication information include: the first indication information is carried in the MAC CE, and the second indication information is carried in the DCI; or, the first indication information is carried in the DCI, and the second indication information is carried in the MAC CE.

It should be noted that updates of the first indication information and the second indication information are independent. That is, possible cases of information updates include: the first indication information remains unchanged, and the second indication information changes; or, the first indication information changes, and the second indication information remains unchanged; or, both the first indication information and the second indication information changes.

It should be noted that the second indication information may be sent a plurality of times, and information of each indication is independent. For example, the second indication information indicates the M-TRP transmission state in an i-th time of transmission, and indicates the S-TRP transmission state in a (i+1)-th time of transmission, in which i is a positive integer. The present disclosure is not limited to this.

In some embodiments, the second indication information is further configured to indicate a third TCI state of at least one channel, and the at least one channel includes at least one of: a physical uplink control channel (PUCCH); a physical downlink shared channel (PDSCH); and a physical downlink control channel (PDCCH). That is, the third TCI state is the same as the second TCI state; or, in a case that the second TCI state includes an uplink TCI state and the at least one channel is the PDCCH or the PDSCH, the third TCI state includes a downlink TCI state corresponding to the uplink TCI state.

In some embodiments, an MAC CE or a DCI where the second indication information is located is further configured to indicate a third TCI state of at least one channel, and the at least one channel includes at least one of: a physical uplink control channel (PUCCH); a physical downlink shared channel (PDSCH); and a physical downlink control channel (PDCCH).

Furthermore, the third TCI state is a subset of the first TCI state in a case that the at least one channel includes the PUCCH. That is, the third TCI state is the same as the first TCI state; or, the third TCI state is a proper subset of the first TCI state.

Optionally, the second indication information further indicates a PUCCH resource index in a case that the at least one channel includes the PUCCH.

Furthermore, in a case that the at least one channel includes the PDCCH or the PDSCH, the first TCI state includes N joint TCI states and/or downlink TCI states, and the third TCI state is a subset of the N joint TCI states and/or downlink TCI states. That is, the third TCI state is the same as the first TCI state; or, the third TCI state is a proper subset of the first TCI state, or the third TCI state is a proper subset of the N joint TCI states and/or downlink TCI states.

Optionally, the second indication information further indicates an SS set ID or a CORESET ID or a CORESET group ID or a PDCCH group ID or a CORESETPoolIndex or a PDSCH group ID corresponding to the PDCCH or the PDSCH, in a case that the at least one channel includes the PDCCH or the PDSCH.

In some embodiments, the second indication information includes at least one bandwidth part identity (BWP ID) and/or at least one component carrier identity (CC ID).

Furthermore, in a case that the CC ID is a CC ID in a CC list, the second TCI state is applicable to all BWPs on all CCs in the CC list. That is, the BWP ID may be ignored. The CC list is a list configured by the base station.

In some embodiments, at least one BWP ID and/or at least one CC ID corresponding to the second TCI state indicated by the second indication information are the same as a BWP ID and/or a CC ID corresponding to the N TCI states indicated by the first indication information.

In summary, in a case that the terminal receives the first indication information configured to indicate a plurality of sets of TCI states, the terminal then receives the second indication information configured to indicate the TCI states used in a case that the PUSCH is transmitted, thereby realizing a dynamic switching between the multi transmission reception point transmission state and the single transmission reception point transmission state of the PUSCH, and improving a transmission flexibility of the PUSCH based on the unified TCI state.

FIG. 3 shows a flow chart of a method for indicating a TCI state according to an embodiment of the present disclosure. The method may be performed by the access network device in the communication system shown in FIG. 1. The method includes the following steps.

In step 320, first indication information is sent.

The access network device sends the first indication information to the terminal.

The first indication information is configured to indicate a first TCI state, the first TCI state includes N TCI states, and the TCI state includes a joint TCI state and/or an uplink TCI state, in which N is an integer greater than 1. That is, the first indication information is configured to indicate information of a plurality of joint/uplink TCI states. That is, the first indication information is configured to indicate a unified TCI state of an uplink channel and/or signal. Each of the N TCI states may be the joint TCI state or the uplink TCI state.

In some embodiments, the first indication information is carried in a first medium access control control element (MAC CE), and the first MAC CE is configured to indicate the N TCI states.

In some embodiments, the first indication information is carried in a second MAC CE and a first DCI, the second MAC CE is configured to indicate N TCI states corresponding to each of at least two code points, and the first DCI is configured to indicate one code point of the at least two code points.

In some embodiments, the first indication information further includes identification information (ID) corresponding to each TCI state, and the identification information includes a control resource set pool index (CORESETPoolIndex) or a CORESET group ID or an SS set group ID or a PDCCH group ID or a PUSCH group ID; or, the first indication information includes the N TCI states, and each of the N TCI states has a default mapping relationship with identification information.

The access network device sends the first indication information to the terminal. For the relevant introduction of the first indication information, reference may be made to the descriptions of the above step 220, which will not be repeated here.

In step 340, second indication information is sent.

The terminal receives the second indication information sent by the access network device.

The second indication information is configured to indicate a second TCI state used in a case that a first PUSCH is transmitted. The second TCI state includes M TCI states, the M TCI states are a subset of the N TCI states, and M is a positive integer not greater than N. That is, the M TCI states are the same as the N TCI states, or the M TCI states are a proper subset of the N TCI states; that is, the M TCI states are all or part of the N TCI states. Each of the M TCI states may be the joint TCI state or the uplink TCI state.

In some embodiments, the first PUSCH is configured with at least one of: a transmission scheme based on an FDM; a transmission scheme based on a TDM; DMRS ports of at least two CDM groups; and a transmission scheme based on an SFN.

Optionally, the transmission scheme based on the SFN includes: SFN scheme A; or SFN scheme B.

Optionally, the transmission scheme based on the TDM includes: repetition type A; or repetition type B.

In some embodiments, the first PUSCH includes at least one of following types: a dynamic scheduled PUSCH; a configured grant type 1 PUSCH; and a configured grant type 2 PUSCH.

In some embodiments, the first PUSCH is configured with at least one of following configuration parameters: at least one sounding reference signal (SRS) resource set indicator; at least one SRS resource indicator; at least one field layer; at least one precoding information and number of layers; at least one transmitted precoding matrix indicator (TPMI); at least one SRS resource set; at least one pathloss reference signal; and at least one power control parameter set.

In some embodiments, in a case that M is equal to 1, it is an S-TRP transmission state.

In some embodiments, in a case that M is greater than 1, that is, in the M-TRP transmission state, different frequency domain resources of the first PUSCH correspond to different TCI states in a case that the first PUSCH is configured with the transmission scheme based on the FDM and M is greater than 1; different time domain resources of the first PUSCH correspond to different TCI states in a case that the first PUSCH is configured with the transmission scheme based on the TDM and M is greater than 1; DMRS ports of different CDM groups of the first PUSCH correspond to different TCI states in a case that the first PUSCH is configured with the DMRS ports of the at least two CDM groups and M is greater than 1; and DMRS ports of the first PUSCH correspond to the M TCI states in a case that the first PUSCH is configured with the transmission scheme based on the SFN and M is greater than 1.

In some embodiments, the second indication information is carried in a third MAC CE. The third MAC CE is the same as or different from an MAC CE where the first indication information is located. The MAC CE where the first indication information is located includes the first MAC CE or the second MAC CE.

In some embodiments, the third MAC CE is configured to indicate both the N TCI states (content of the first indication information) and the M TCI states corresponding to the first PUSCH (content of the second indication information) in a case that the third MAC CE is the same as an MAC CE carrying the first indication information. In addition, the third MAC CE is further configured to indicate a corresponding relationship between identification information and the N TCI states (optional content of the first indication information) and/or indicate a corresponding relationship between identification information and the M TCI states (optional content of the second indication information). The identification information is a CORESETPoolIndex or a CORESET group ID or a SS set group ID or a PDCCH group ID or a PUSCH group ID.

In some embodiments, the N TCI states have a corresponding relationship with at least one configuration parameter. In a case that the third MAC CE indicates an i-th configuration parameter in the at least one configuration parameter, it is determined that the M TCI states corresponding to the first PUSCH include a TCI state corresponding to the i-th configuration parameter; or, in a case that at least two configuration parameters are provided and the third MAC CE indicates the at least two configuration parameters, it is determined that the M TCI states corresponding to the first PUSCH include TCI states corresponding to the at least two configuration parameters, in which i is a positive integer not greater than N, and the at least one configuration parameter includes at least one of at least one SRS resource set indicator, at least one SRS resource indicator, at least one field layer, at least one precoding information and number of layers, at least one TPMI, at least one SRS resource set, at least one pathloss reference signal and at least one power control parameter set.

In some embodiments, the second indication information is carried in a second DCI, and the second DCI is the same as or different from a DCI where the first indication information is located.

For example, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with or without a downlink assignment, and the second DCI is an uplink DCI in a DCI format of 0_1 or 0_2; or, the first indication information is carried in a DCI in a DCI format of 1_1 or 1_2 with or without a downlink assignment, and the second DCI is a DCI in a DCI format other than 1_1 and 1_2.

For example, in a case that a DCI where the second indication information is located is a DCI without the downlink assignment, a field used by the second indication information in the DCI in the DCI format of 1_1 or 1_2 without the downlink assignment includes at least one of:
a frequency domain resource assignment;
a time domain resource assignment;
a virtual resource block to physical resource block mapping;
a physical resource block bundling size indicator;
a rate matching indicator;
a non-zero power CSI-RS triggering;
an HARQ process number;
a downlink assignment index;
a transmit power control command for a scheduled PUCCH;
a second transmit power control command for a scheduled PUCCH;
a PUCCH resource indicator;
a timing indicator from a PDSCH to an HARQ feedback;
a one-shot HARQ-ACK request;
an enhanced type 3 codebook indicator;
a PDSCH group index;
a new feedback indicator;
the number of requested PDSCH groups;
an HARQ-ACK retransmission indicator;
an antenna port;
a sounding reference signal request;
an SRS offset indicator;
CBG transmission information;
CBG flushing out information;
a DMRS sequence initialization;
a priority indicator;
a channel access-cyclic prefix (CP);
a minimum applicable scheduling offset indicator;
a secondary cell dormancy indication;
a PDCCH monitoring adaptation indication;
a PUCCH cell indicator;
a redundancy version;
a TCI state indication field;
an enhanced TCI state indication field; and
a newly added TCI state indication field: a second TCI state indication field.

In another case, when the second DCI is the uplink DCI in the DCI format of 0_1 or 0_2, a field used by the second indication information in the uplink DCI in the DCI format of 0_1 or 0_2 includes at least one of:
an SRS resource set indicator; and
a TCI state indication field.

In some embodiments, the second indication information is in the SRS resource set indicator field of the uplink DCI in the DCI format of 0_1 or 0_2, and a value of N is 2, that is, two TCI states are provided. K repetitive resources corresponding to the first PUSCH use a first one of the two TCI states in a case that the SRS resource set indicator is a first value; or, K repetitive resources corresponding to the first PUSCH use a second one of the two TCI states in a case that the SRS resource set indicator is a second value; or, K repetitive resources corresponding to the first PUSCH use a first one of the two TCI states and a second one of the two TCI states in a case that the SRS resource set indicator is a third value. K is an integer greater than 1.

In some embodiments, the second indication information is in the SRS resource set indicator field of the uplink DCI in the DCI format of 0_1 or 0_2. The K repetitive resources corresponding to the first PUSCH use at least one TCI state of the N TCI states in a case that the SRS resource set indicator is an i-th value. N is an integer greater than 2.

Furthermore, in a case that the TCI states used by the above K repetitive resources include at least two TCI states of the N TCI states, the at least two TCI states are used based on a mapping manner, and the mapping manner is a cyclic mapping or a sequential mapping.

It should be noted that, in a traditional method, no TCI state indication field is in the uplink DCI in the DCI format of 0_1 or 0_2. In order to indicate the second TCI state used in a case that the first PUSCH is transmitted, in some embodiments, a TCI state indication field may also be added to the uplink DCI in the DCI format of 0_1 or 0_2 to indicate the second indication information.

In another case, that is, in a case that the second DCI is the DCI in the DCI format other than 1_1 and 1_2, a SS set type associated with the second DCI is a user equipment (UE) specific SS set or a common SS set.

In some embodiments, other possible cases of the positions of the first indication information and the second indication information include: the first indication information is carried in the MAC CE, and the second indication information is carried in the DCI; or, the first indication information is carried in the DCI, and the second indication information is carried in the MAC CE.

It should be noted that updates of the first indication information and the second indication information are independent. That is, possible cases of information updates include: the first indication information remains unchanged, and the second indication information changes; or, the first indication information changes, and the second indication information remains unchanged; or, both the first indication information and the second indication information changes.

It should be noted that the second indication information may be sent a plurality of times, and information of each indication is independent. For example, the second indication information indicates the M-TRP transmission state in an i-th time of transmission, and indicates the S-TRP transmission state in a (i+1)-th time of transmission, in which i is a positive integer. The present disclosure is not limited to this.

In some embodiments, the second indication information is further configured to indicate a third TCI state of at least one channel, and the at least one channel includes at least one of: a physical uplink control channel (PUCCH); a physical downlink shared channel (PDSCH); and a physical downlink control channel (PDCCH). That is, the third TCI state is the same as the second TCI state; or, in a case that the second TCI state includes an uplink TCI state and the at least one channel is the PDCCH or the PDSCH, the third TCI state includes a downlink TCI state corresponding to the uplink TCI state.

In some embodiments, an MAC CE or a DCI where the second indication information is located is further configured to indicate a third TCI state of at least one channel, and the at least one channel includes at least one of: a physical uplink control channel (PUCCH); a physical downlink shared channel (PDSCH); and a physical downlink control channel (PDCCH).

Furthermore, the third TCI state is a subset of the first TCI state in a case that the at least one channel includes the PUCCH.

Furthermore, in a case that the at least one channel includes the PDCCH or the PDSCH, the first TCI state includes N joint TCI states and/or downlink TCI states, and the third TCI state is a subset of the N joint TCI states and/or downlink TCI states.

In some embodiments, the second indication information includes at least one BWP ID and/or at least one CC ID.

Furthermore, in a case that the CC ID is a CC ID in a CC list, the second TCI state is applicable to all BWPs on all CCs in the CC list. That is, the BWP ID may be ignored. The CC list is a list configured by the base station.

In some embodiments, at least one BWP ID and/or at least one CC ID corresponding to the second TCI state indicated by the second indication information are the same as a BWP ID and/or a CC ID corresponding to the N TCI states indicated by the first indication information.

The access network device sends the second indication information to the terminal. For the relevant introduction of the second indication information, reference may be made to the descriptions of the above step 240, which will not be repeated here.

In summary, in a case that the access network device sends the first indication information configured to indicate a plurality of sets of TCI states to the terminal, the access network device then sends to the terminal the second indication information configured to indicate the TCI states used in a case that the PUSCH is transmitted, thereby realizing a dynamic switching between the multi transmission reception point transmission state and the single transmission reception point transmission state of the PUSCH, and improving a transmission flexibility of the PUSCH based on the unified TCI state.

It should be noted that the embodiments of the present disclosure include a plurality of optional steps, and each step includes at least one embodiment. Each step may be an independent embodiment; or, each step may be divided into a plurality of embodiments; or, a plurality of steps may constitute one embodiment. For example, the above step 240 may constitute one embodiment alone; or, the step 240 may also be divided into a plurality of embodiments in the above multiple possible embodiments, and so on. The present disclosure does not make any specific limitation to this.

FIG. 4 is a block diagram of an apparatus for indicating a TCI state according to an illustrative embodiment of the present disclosure. As shown in FIG. 4, the apparatus includes:
a first receiving module 420 configured to receive first indication information, in which the first indication information is configured to indicate a first TCI state, the first TCI state includes N TCI states, and the TCI state includes a joint TCI state and/or an uplink TCI state, in which N is an integer greater than 1; and
a second receiving module 440 configured to receive second indication information, in which the second indication information is configured to indicate a second TCI state used in a case that a first physical uplink shared channel (PUSCH) is transmitted, and the second TCI state includes M TCI states.

The M TCI states are a subset of the N TCI states, and M is a positive integer not greater than N.

In a possible design, the first PUSCH is configured with at least one of: a transmission scheme based on a frequency division multiplexing (FDM); a transmission scheme based on a time division multiplexing (TDM); demodulation reference signal (DMRS) ports of at least two code division multiplexing (CDM) groups; and a transmission scheme based on a single-frequency network (SFN).

In a possible design, the transmission scheme based on the single-frequency network (SFN) includes: SFN scheme A; or SFN scheme B.

In a possible design, the transmission scheme based on the time division multiplexing (TDM) includes: repetition type A; or repetition type B.

In a possible design, the first PUSCH includes at least one of following types: a dynamic scheduled PUSCH; a configured grant type 1 PUSCH; and a configured grant type 2 PUSCH.

In a possible design, the first PUSCH is configured with at least one of following configuration parameters: at least one sounding reference signal (SRS) resource set indicator; at least one SRS resource indicator; at least one field layer; at least one precoding information and number of layers; at least one transmitted precoding matrix indicator (TPMI); at least one SRS resource set; at least one pathloss reference signal; and at least one power control parameter set.

In a possible design, different frequency domain resources of the first PUSCH correspond to different TCI states in a case that the first PUSCH is configured with the transmission scheme based on the FDM and M is greater than 1; different time domain resources of the first PUSCH correspond to different TCI states in a case that the first PUSCH is configured with the transmission scheme based on the TDM and M is greater than 1; DMRS ports of different CDM groups of the first PUSCH correspond to different TCI states in a case that the first PUSCH is configured with the demodulation reference signal (DMRS) ports of the at least two code division multiplexing (CDM) groups and M is greater than 1; and DMRS ports of the first PUSCH correspond to the M TCI states in a case that the first PUSCH is configured with the transmission scheme based on the SFN and M is greater than 1.

In a possible design, the first indication information is carried in a first medium access control control element (MAC CE), and the first MAC CE is configured to indicate the N TCI states; or, the first indication information is carried in a second MAC CE and first downlink control information (DCI), the second MAC CE is configured to indicate N TCI states corresponding to each of at least two code points, and the first DCI is configured to indicate one code point of the at least two code points.

In a possible design, the first indication information includes identification information (ID) corresponding to each TCI state, and the identification information includes a control resource set pool index (CORESETPoolIndex) or a control resource set (CORESET) group ID or a search space set (SS set) group ID or a physical downlink control channel (PDCCH) group ID or a PUSCH group ID; or, the first indication information includes the N TCI states, and each of the N TCI states has a default mapping relationship with identification information.

In a possible design, the second indication information is carried in a third MAC CE, and the third MAC CE is the same as or different from an MAC CE where the first indication information is located.

In a possible design, the third MAC CE is configured to indicate the N TCI states and the M TCI states corresponding to the first PUSCH in a case that the third MAC CE is the same as the MAC CE where the first indication information is located.

In a possible design, the N TCI states have a corresponding relationship with at least one configuration parameter; in a case that the third MAC CE indicates an i-th configuration parameter in the at least one configuration parameter, it is determined that the M TCI states corresponding to the first PUSCH include a TCI state corresponding to the i-th configuration parameter; or, in a case that at least two configuration parameters are provided and the third MAC CE indicates the at least two configuration parameters, it is determined that the M TCI states corresponding to the first PUSCH include TCI states corresponding to the at least two configuration parameters, in which i is a positive integer not greater than N, and the at least one configuration parameter includes at least one of at least one SRS resource set indicator, at least one SRS resource indicator, at least one field layer, at least one precoding information and number of layers, at least one TPMI, at least one SRS resource set, at least one pathloss reference signal and at least one power control parameter set.

In a possible design, the second indication information is carried in a second DCI, and the second DCI is the same as or different from a DCI where the first indication information is located.

In a possible design, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with or without a downlink assignment, and the second DCI is an uplink DCI in a DCI format of 0_1 or 0_2; or, the first indication information is carried in a DCI in a DCI format of 1_1 or 1_2 with or without a downlink assignment, and the second DCI is a DCI in a DCI format other than 1_1 and 1_2.

In a possible design, a field used by the second indication information in the DCI in the DCI format of 1_1 or 1_2 without the downlink assignment includes at least one of: a frequency domain resource assignment; a time domain resource assignment; a virtual resource block to physical resource block mapping; a physical resource block bundling size indicator; a rate matching indicator; a non-zero power channel state information reference signal (CSI-RS) triggering; a hybrid automatic repeat request (HARQ) process number; a downlink assignment index; a transmit power control command for a scheduled physical uplink control channel (PUCCH); a second transmit power control command for a scheduled PUCCH; a PUCCH resource indicator; a timing indicator from a physical downlink shared channel (PDSCH) to an HARQ feedback; a one-shot hybrid automatic repeat request acknowledgement (HARQ-ACK) request; an enhanced type 3 codebook indicator; a PDSCH group index; a new feedback indicator; the number of requested PDSCH groups; an HARQ-ACK retransmission indicator; an antenna port; a sounding reference signal (SRS) request; an SRS offset indicator; code block group (CBG) transmission information; CBG flushing out information; a demodulation reference signal (DMRS) sequence initialization; a priority indicator; a channel access-cyclic prefix (CP); a minimum applicable scheduling offset indicator; a secondary cell dormancy indication; a PDCCH monitoring adaptation indication; a physical uplink control channel (PUCCH) cell indicator; a redundancy version; a TCI state indication field; an enhanced TCI state indication field; and a second TCI state indication field.

In a possible design, a field used by the second indication information in the uplink DCI in the DCI format of 0_1 or 0_2 includes at least one of: an SRS resource set indicator; and a TCI state indication field.

In a possible design, K repetitive resources corresponding to the first PUSCH use a first TCI state in a case that the SRS resource set indicator is a first value; or, K repetitive resources corresponding to the first PUSCH use a second TCI state in a case that the SRS resource set indicator is a second value; or, K repetitive resources corresponding to the first PUSCH use a first TCI state and a second TCI state in a case that the SRS resource set indicator is a third value. K is an integer greater than 1.

In a possible design, K repetitive resources corresponding to the first PUSCH use at least one TCI state of the N TCI states in a case that the SRS resource set indicator is an i-th value. N is an integer greater than 2.

In a possible design, in a case that the TCI states used by the K repetitive resources include at least two TCI states of the N TCI states, the at least two TCI states are used based on a mapping manner, and the mapping manner is a cyclic mapping or a sequential mapping.

In a possible design, an SS set type associated with the second DCI is a user equipment specific SS set or a common SS set in a case that the second DCI is the DCI in the DCI format other than 1_1 and 1_2.

In some embodiments, the second indication information is further configured to indicate a third TCI state of at least one channel, and the at least one channel includes at least one of: a physical uplink control channel (PUCCH); a physical downlink shared channel (PDSCH); and a physical downlink control channel (PDCCH). That is, the third TCI state is the same as the second TCI state; or, in a case that the second TCI state includes an uplink TCI state and the at least one channel is the PDCCH or the PDSCH, the third TCI state includes a downlink TCI state corresponding to the uplink TCI state.

In a possible design, an MAC CE or a DCI where the second indication information is located is further configured to indicate a third TCI state of at least one channel, and the at least one channel includes at least one of: a physical uplink control channel (PUCCH); a physical downlink shared channel (PDSCH); and a physical downlink control channel (PDCCH).

In a possible design, the third TCI state is a subset of the first TCI state in a case that the at least one channel includes the PUCCH; or, in a case that the at least one channel includes the PDCCH or the PDSCH, the first TCI state includes N joint TCI states and/or downlink TCI states, and the third TCI state is a subset of the N joint TCI states and/or downlink TCI states.

In a possible design, the second indication information includes at least one bandwidth part identity (BWP ID) and/or at least one component carrier identity (CC ID).

In a possible design, in a case that the CC ID is a CC ID in a CC list, the second TCI state is applicable to all BWPs on all CCs in the CC list.

In a possible design, at least one BWP ID and/or at least one CC ID corresponding to the second TCI state indicated by the second indication information are the same as a BWP ID and/or a CC ID corresponding to the N TCI states indicated by the first indication information.

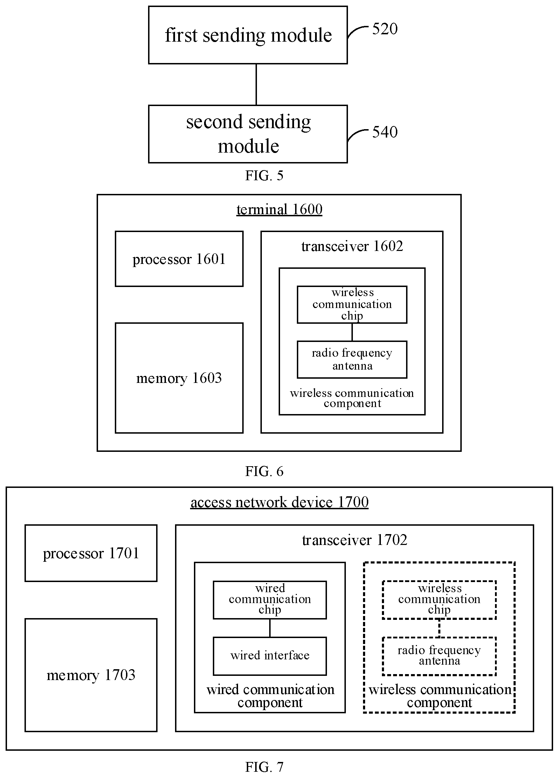

FIG. 5 is a block diagram of an apparatus for indicating a TCI state according to an illustrative embodiment of the present disclosure. As shown in FIG. 5, the apparatus includes:
a first sending module 520 configured to send first indication information, in which the first indication information is configured to indicate a first TCI state, the first TCI state includes N TCI states, and the TCI state includes a joint TCI state and/or an uplink TCI state, in which N is an integer greater than 1; and
a second sending module 540 configured to send second indication information, in which the second indication information is configured to indicate a second TCI state used in a case that a first physical uplink shared channel (PUSCH) is transmitted, and the second TCI state includes M TCI states.

The M TCI states are a subset of the N TCI states, and M is a positive integer not greater than N.

In a possible design, the first PUSCH is configured with at least one of: a transmission scheme based on a frequency division multiplexing (FDM); a transmission scheme based on a time division multiplexing (TDM); demodulation reference signal (DMRS) ports of at least two code division multiplexing (CDM) groups; and a transmission scheme based on a single-frequency network (SFN).

In a possible design, the transmission scheme based on the single-frequency network (SFN) includes: SFN scheme A; or SFN scheme B.

In a possible design, the transmission scheme based on the time division multiplexing (TDM) includes: repetition type A; or repetition type B.

In a possible design, the first PUSCH includes at least one of following types: a dynamic scheduled PUSCH; a configured grant type 1 PUSCH; and a configured grant type 2 PUSCH.

In a possible design, the first PUSCH is configured with at least one of following configuration parameters: at least one sounding reference signal (SRS) resource set indicator; at least one SRS resource indicator; at least one field layer; at least one precoding information and number of layers; at least one transmitted precoding matrix indicator (TPMI); at least one SRS resource set; at least one pathloss reference signal; and at least one power control parameter set.

In a possible design, different frequency domain resources of the first PUSCH correspond to different TCI states in a case that the first PUSCH is configured with the transmission scheme based on the FDM and M is greater than 1; different time domain resources of the first PUSCH correspond to different TCI states in a case that the first PUSCH is configured with the transmission scheme based on the TDM and M is greater than 1; DMRS ports of different CDM groups of the first PUSCH correspond to different TCI states in a case that the first PUSCH is configured with the demodulation reference signal (DMRS) ports of the at least two code division multiplexing (CDM) groups and M is greater than 1; and DMRS ports of the first PUSCH correspond to the M TCI states in a case that the first PUSCH is configured with the transmission scheme based on the SFN and M is greater than 1.

In a possible design, the first indication information is carried in a first medium access control control element (MAC CE), and the first MAC CE is configured to indicate the N TCI states; or, the first indication information is carried in a second MAC CE and first downlink control information (DCI), the second MAC CE is configured to indicate N TCI states corresponding to each of at least two code points, and the first DCI is configured to indicate one code point of the at least two code points.

In a possible design, the first indication information includes identification information (ID) corresponding to each TCI state, and the identification information includes a control resource set pool index (CORESETPoolIndex) or a control resource set (CORESET) group ID or a search space set (SS set) group ID or a physical downlink control channel (PDCCH) group ID or a PUSCH group ID; or, the first indication information includes the N TCI states, and each of the N TCI states has a default mapping relationship with identification information.

In a possible design, the second indication information is carried in a third MAC CE, and the third MAC CE is the same as or different from an MAC CE where the first indication information is located.

In a possible design, the third MAC CE is configured to indicate the N TCI states and the M TCI states corresponding to the first PUSCH in a case that the third MAC CE is the same as the MAC CE where the first indication information is located.

In a possible design, the N TCI states have a corresponding relationship with at least one configuration parameter; in a case that the third MAC CE indicates an i-th configuration parameter in the at least one configuration parameter, it is determined that the M TCI states corresponding to the first PUSCH include a TCI state corresponding to the i-th configuration parameter; or, in a case that at least two configuration parameters are provided and the third MAC CE indicates the at least two configuration parameters, it is determined that the M TCI states corresponding to the first PUSCH include TCI states corresponding to the at least two configuration parameters, in which i is a positive integer not greater than N, and the at least one configuration parameter includes at least one of at least one SRS resource set indicator, at least one SRS resource indicator, at least one field layer, at least one precoding information and number of layers, at least one TPMI, at least one SRS resource set, at least one pathloss reference signal and at least one power control parameter set.

In a possible design, the second indication information is carried in a second DCI, and the second DCI is the same as or different from a DCI where the first indication information is located.

In a possible design, the first indication information is carried in a DCI in a DCI format of 1_1 or 1_2 without a downlink assignment, and the second DCI is the DCI in the DCI format of 1_1 or 1_2 without the downlink assignment; or, the first indication information is carried in a DCI in a DCI format of 1_1 or 1_2 with or without a downlink assignment, and the second DCI is an uplink DCI in a DCI format of 0_1 or 0_2; or, the first indication information is carried in a DCI in a DCI format of 1_1 or 1_2 with or without a downlink assignment, and the second DCI is a DCI in a DCI format other than 1_1 and 1_2.

In a possible design, a field used by the second indication information in the DCI in the DCI format of 1_1 or 1_2 without the downlink assignment includes at least one of: a frequency domain resource assignment; a time domain resource assignment; a virtual resource block to physical resource block mapping; a physical resource block bundling size indicator; a rate matching indicator; a non-zero power channel state information reference signal (CSI-RS) triggering; a hybrid automatic repeat request (HARQ) process number; a downlink assignment index; a transmit power control command for a scheduled physical uplink control channel (PUCCH); a second transmit power control command for a scheduled PUCCH; a PUCCH resource indicator; a timing indicator from a physical downlink shared channel (PDSCH) to an HARQ feedback; a one-shot hybrid automatic repeat request acknowledgement (HARQ-ACK) request; an enhanced type 3 codebook indicator; a PDSCH group index; a new feedback indicator; the number of requested PDSCH groups; an HARQ-ACK retransmission indicator; an antenna port; a sounding reference signal (SRS) request; an SRS offset indicator; code block group (CBG) transmission information; CBG flushing out information; a demodulation reference signal (DMRS) sequence initialization; a priority indicator; a channel access-cyclic prefix (CP); a minimum applicable scheduling offset indicator; a secondary cell dormancy indication; a PDCCH monitoring adaptation indication; a physical uplink control channel (PUCCH) cell indicator; a redundancy version; a TCI state indication field; an enhanced TCI state indication field; and a second TCI state indication field.

In a possible design, a field used by the second indication information in the uplink DCI in the DCI format of 0_1 or 0_2 includes at least one of: an SRS resource set indicator; and a TCI state indication field.

In a possible design, K repetitive resources corresponding to the first PUSCH use a first TCI state in a case that the SRS resource set indicator is a first value; or, K repetitive resources corresponding to the first PUSCH use a second TCI state in a case that the SRS resource set indicator is a second value; or, K repetitive resources corresponding to the first PUSCH use a first TCI state and a second TCI state in a case that the SRS resource set indicator is a third value. K is an integer greater than 1.

In a possible design, K repetitive resources corresponding to the first PUSCH use at least one TCI state of the N TCI states in a case that the SRS resource set indicator is an i-th value. N is an integer greater than 2.

In a possible design, in a case that the TCI states used by the K repetitive resources include at least two TCI states of the N TCI states, the at least two TCI states are used based on a mapping manner, and the mapping manner is a cyclic mapping or a sequential mapping.

In a possible design, an SS set type associated with the second DCI is a user equipment specific SS set or a common SS set in a case that the second DCI is the DCI in the DCI format other than 1_1 and 1_2.

In some embodiments, the second indication information is further configured to indicate a third TCI state of at least one channel, and the at least one channel includes at least one of: a physical uplink control channel (PUCCH); a physical downlink shared channel (PDSCH); and a physical downlink control channel (PDCCH). That is, the third TCI state is the same as the second TCI state; or, in a case that the second TCI state includes an uplink TCI state and the at least one channel is the PDCCH or the PDSCH, the third TCI state includes a downlink TCI state corresponding to the uplink TCI state.

In a possible design, an MAC CE or a DCI where the second indication information is located is further configured to indicate a third TCI state of at least one channel, and the at least one channel includes at least one of: a physical uplink control channel (PUCCH); a physical downlink shared channel (PDSCH); and a physical downlink control channel (PDCCH).

In a possible design, the third TCI state is a subset of the first TCI state in a case that the at least one channel includes the PUCCH; or, in a case that the at least one channel includes the PDCCH or the PDSCH, the first TCI state includes N joint TCI states and/or downlink TCI states, and the third TCI state is a subset of the N joint TCI states and/or downlink TCI states.

In a possible design, the second indication information includes at least one bandwidth part identity (BWP ID) and/or at least one component carrier identity (CC ID).

In a possible design, in a case that the CC ID is a CC ID in a CC list, the second TCI state is applicable to all BWPs on all CCs in the CC list.

In a possible design, at least one BWP ID and/or at least one CC ID corresponding to the second TCI state indicated by the second indication information are the same as a BWP ID and/or a CC ID corresponding to the N TCI states indicated by the first indication information.

FIG. 6 is a block diagram of a terminal 1600 according to an embodiment of the present disclosure. The terminal 1600 may include a processor 1601, a transceiver 1602 and a memory 1603.

The processor 1601 includes one or more processing cores. The processor 1601 executes various functional applications and information processing by running software programs and modules.

The transceiver 1602 may include a receiver and a transmitter, for example, the receiver and the transmitter may be the same wireless communication component, and the wireless communication component may include a wireless communication chip and a radio frequency antenna.

The memory 1603 may be connected to the processor 1601 and the transceiver 1602.

The memory 1603 may be configured to store a computer program executed by a processor, and the processor 1601 is configured to execute the computer program to implement individual steps executed by the terminal in the wireless communication system in the above method embodiments.

In addition, the memory 1603 may be implemented by any type of volatile or non-volatile storage device, or a combination thereof, including, but not limited to: a magnetic disk or an optical disc, an electrically-erasable programmable read-only memory, an erasable programmable read-only memory, a static random-access memory, a read-only memory, a magnetic memory, a flash memory, a programmable read-only memory.

The process performed by the transceiver 1602 may refer to individual steps performed by the terminal in the above methods.

FIG. 7 is a block diagram of an access network device 1700 according to an embodiment of the present disclosure. The network device 1700 may include a processor 1701, a transceiver 1702, and a memory 1703.

The processor 1701 includes one or more processing cores. The processor 1701 executes various functional applications and information processing by running software programs and modules.

The transceiver 1702 may include a receiver and a transmitter. For example, the transceiver 1702 may include a wired communication component, which may include a wired communication chip and a wired interface (such as a fiber interface). Optionally, the transceiver 1702 may also include a wireless communication component, and the wireless communication component may include a wireless communication chip and a radio frequency antenna.

The memory 1703 may be connected to the processor 1701 and the transceiver 1702.

The memory 1703 may be configured to store a computer program executed by a processor, and the processor 1701 is configured to execute the computer program to implement individual steps executed by the access network device in the wireless communication system in the above method embodiments.

In addition, the memory 1703 may be implemented by any type of volatile or non-volatile storage device, or a combination thereof, including, but not limited to: a magnetic disk or an optical disc, an electrically-erasable programmable read-only memory, an erasable programmable read-only memory, a static random-access memory, a read-only memory, a magnetic memory, a flash memory, a programmable read-only memory.

Embodiments of the present disclosure also provide a computer-readable storage medium having stored therein at least one instruction, at least one program, a code set or an instruction set. The at least one instruction, the at least one program, the code set or the instruction set is loaded and executed by a processor to cause a communication device to implement the method for indicating the TCI state as described above.

The present disclosure also provides a computer program product, which includes computer instructions stored in a computer-readable storage medium. The computer instructions are read by a processor of a computer device from the computer-readable storage medium and executed by the processor, so that the computer program product executes individual steps executed by the terminal or the access network device in the above methods.

The present disclosure also provides a chip, which is configured to run in a computer device, so that the computer device executes individual steps executed by the terminal or the access network device in the above methods.

The present disclosure also provides a computer program, which is executed by a processor of a computer device, and a network device equipped with the computer program implements individual steps executed by the terminal or the access network device in the above methods.

It should be understood by those skilled in the art, in one or more of the above examples, the functions described in the embodiments of the present disclosure may be realized by the hardware, software, firmware or any combination thereof. When they are realized by the hardware, these functions may be stored in computer-readable media or transmitted as one or more instructions or codes on computer-readable media. The computer-readable medium includes a computer storage medium and a communication medium, and the communication medium includes any medium facilitating a transmission of a computer program from one place to another. The storage medium may be a usable medium accessible to a general-purpose or special-purpose computer.

Terms used herein in the embodiments of the present disclosure are only for the purpose of describing specific embodiments, but should not be construed to limit the embodiments of the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the terms "if" and "in response to" may be construed to mean "when" or "upon" or "in response to determining" depending on the context.

It should be understood that above embodiments of the present disclosure are just illustrative embodiments, and cannot be construed to limit the present disclosure. Any modification, equivalent replacement, improvement, etc. made within the spirit and principles of the present disclosure shall be included in the scope of protection of the present disclosure.

## Claims

1. A method for indicating a transmission configuration indication (TCI) state, performed by a terminal, and comprising:
receiving first indication information, wherein the first indication information is configured to indicate a first TCI state, the first TCI state comprises N TCI states, and the TCI state comprises a joint TCI state and/or an uplink TCI state, wherein N is an integer greater than 1; and
receiving second indication information, wherein the second indication information is configured to indicate a second TCI state used in a case that a first physical uplink shared channel (PUSCH) is transmitted, and the second TCI state comprises M TCI states,
wherein the M TCI states are a subset of the N TCI states, and M is a positive integer not greater than N.

2. The method according to claim 1, wherein the first PUSCH is configured with at least one of:
a transmission scheme based on a frequency division multiplexing (FDM);
a transmission scheme based on a time division multiplexing (TDM);
demodulation reference signal (DMRS) ports of at least two code division multiplexing (CDM) groups; and
a transmission scheme based on a single-frequency network (SFN).

3. The method according to claim 2, wherein the transmission scheme based on the single-frequency network (SFN) comprises:
SFN scheme A; or
SFN scheme B.

4. The method according to claim 2, wherein the transmission scheme based on the time division multiplexing (TDM) comprises:
repetition type A; or
repetition type B.

5. The method according to claim 2, wherein the first PUSCH comprises at least one of following types:
a dynamic scheduled PUSCH;
a configured grant type 1 PUSCH; and
a configured grant type 2 PUSCH.

6. The method according to claim 2, wherein the first PUSCH is configured with at least one of following configuration parameters:
at least one sounding reference signal (SRS) resource set indicator;
at least one SRS resource indicator;
at least one field layer;
at least one precoding information and number of layers;
at least one transmitted precoding matrix indicator (TPMI);
at least one SRS resource set;
at least one pathloss reference signal; and
at least one power control parameter set.

7. The method according to claim 2, wherein
different frequency domain resources of the first PUSCH correspond to different TCI states in a case that the first PUSCH is configured with the transmission scheme based on the FDM and M is greater than 1;
different time domain resources of the first PUSCH correspond to different TCI states in a case that the first PUSCH is configured with the transmission scheme based on the TDM and M is greater than 1;
DMRS ports of different CDM groups of the first PUSCH correspond to different TCI states in a case that the first PUSCH is configured with the demodulation reference signal (DMRS) ports of the at least two code division multiplexing (CDM) groups and M is greater than 1; and
DMRS ports of the first PUSCH correspond to the M TCI states in a case that the first PUSCH is configured with the transmission scheme based on the SFN and M is greater than 1.

8. The method according to claim 1, wherein
the first indication information is carried in a first medium access control control element (MAC CE), and the first MAC CE is configured to indicate the N TCI states; or
the first indication information is carried in a second MAC CE and first downlink control information (DCI), the second MAC CE is configured to indicate N TCI states corresponding to each of at least two code points, and the first DCI is configured to indicate one code point of the at least two code points.

9. The method according to claim 8, wherein
the first indication information comprises identification information (ID) corresponding to each TCI state, and the identification information comprises a control resource set pool index (CORESETPoolIndex) or a control resource set (CORESET) group ID or a search space set (SS set) group ID or a physical downlink control channel (PDCCH) group ID or a PUSCH group ID; or
the first indication information comprises the N TCI states, and each of the N TCI states has a default mapping relationship with identification information.

10. The method according to any one of claims 1 to 9, wherein
the second indication information is carried in a third MAC CE, and the third MAC CE is the same as or different from an MAC CE where the first indication information is located.

11. The method according to claim 10, wherein
the third MAC CE is configured to indicate the N TCI states and the M TCI states corresponding to the first PUSCH in a case that the third MAC CE is the same as the MAC CE where the first indication information is located.

12. The method according to claim 10, wherein the N TCI states have a corresponding relationship with at least one configuration parameter;
in a case that the third MAC CE indicates an i-th configuration parameter in the at least one configuration parameter, it is determined that the M TCI states corresponding to the first PUSCH comprise a TCI state corresponding to the i-th configuration parameter; or
in a case that at least two configuration parameters are provided and the third MAC CE indicates the at least two configuration parameters, it is determined that the M TCI states corresponding to the first PUSCH comprise TCI states corresponding to the at least two configuration parameters,
wherein i is a positive integer not greater than N, and the at least one configuration parameter comprises at least one of at least one SRS resource set indicator, at least one SRS resource indicator, at least one field layer, at least one precoding information and number of layers, at least one TPMI, at least one SRS resource set, at least one pathloss reference signal and at least one power control parameter set.

13. The method according to any one of claims 1 to 9, wherein
the second indication information is carried in a second DCI, and the second DCI is the same as or different from a DCI where the first indication information is located.

14. The method according to claim 13, wherein
the first indication information is carried in a DCI in a DCI format of 1_1 or 1_2 without a downlink assignment, and the second DCI is the DCI in the DCI format of 1_1 or 1_2 without the downlink assignment; or
the first indication information is carried in a DCI in a DCI format of 1_1 or 1_2 with or without a downlink assignment, and the second DCI is an uplink DCI in a DCI format of 0_1 or 0_2; or
the first indication information is carried in a DCI in a DCI format of 1_1 or 1_2 with or without a downlink assignment, and the second DCI is a DCI in a DCI format other than 1_1 and 1_2.

15. The method according to claim 14, wherein
a field used by the second indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block bundling size indicator;
a rate matching indicator;
a non-zero power channel state information reference signal (CSI-RS) triggering;
a hybrid automatic repeat request (HARQ) process number;
a downlink assignment index;
a transmit power control command for a scheduled physical uplink control channel (PUCCH);
a transmit power control command for a second scheduled PUCCH;
a PUCCH resource indicator;
a timing indicator from a physical downlink shared channel (PDSCH) to an HARQ feedback;
a one-shot hybrid automatic repeat request acknowledgement (HARQ-ACK) request;
an enhanced type 3 codebook indicator;
a PDSCH group index;
a new feedback indicator;
a number of requested PDSCH groups;
an HARQ-ACK retransmission indicator;
an antenna port;
a sounding reference signal (SRS) request;
an SRS offset indicator;
code block group (CBG) transmission information;
CBG flushing out information;
a demodulation reference signal (DMRS) sequence initialization;
a priority indicator;
a channel access-cyclic prefix (CP);
a minimum applicable scheduling offset indicator;
a secondary cell dormancy indication;
a PDCCH monitoring adaptation indication;
a physical uplink control channel (PUCCH) cell indicator;
a redundancy version;
a TCI state indication field;
an enhanced TCI state indication field; and
a second TCI state indication field.

16. The method according to claim 14, wherein
a field used by the second indication information in the uplink DCI in the DCI format of 0_1 or 0_2 comprises at least one of:
an SRS resource set indicator; and
a TCI state indication field.

17. The method according to claim 16, wherein
K repetitive resources corresponding to the first PUSCH use a first TCI state in a case that the SRS resource set indicator is a first value; or
K repetitive resources corresponding to the first PUSCH use a second TCI state in a case that the SRS resource set indicator is a second value; or
K repetitive resources corresponding to the first PUSCH use a first TCI state and a second TCI state in a case that the SRS resource set indicator is a third value,
wherein K is an integer greater than 1.

18. The method according to claim 16, wherein
K repetitive resources corresponding to the first PUSCH use at least one TCI state of the N TCI states in a case that the SRS resource set indicator is an i-th value,
wherein N is an integer greater than 2.

19. The method according to claim 18, wherein
in a case that the TCI states used by the K repetitive resources comprise at least two TCI states of the N TCI states, the at least two TCI states are used based on a mapping manner, and the mapping manner is a cyclic mapping or a sequential mapping.

20. The method according to claim 14, wherein
an SS set type associated with the second DCI is a user equipment specific SS set or a common SS set in a case that the second DCI is the DCI in the DCI format other than 1_1 and 1_2.

21. The method according to any one of claims 1 to 20, further comprising:
an MAC CE or a DCI where the second indication information is located being further configured to indicate a third TCI state of at least one channel, and the at least one channel comprising at least one of:
a physical uplink control channel (PUCCH);
a physical downlink shared channel (PDSCH); and
a physical downlink control channel (PDCCH).

22. The method according to claim 21, wherein
the third TCI state is a subset of the first TCI state in a case that the at least one channel comprises the PUCCH; or
in a case that the at least one channel comprises the PDCCH or the PDSCH, the first TCI state comprises N joint TCI states and/or downlink TCI states, and the third TCI state is a subset of the N joint TCI states and/or downlink TCI states.

23. The method according to any one of claims 1 to 22, wherein
the second indication information comprises at least one bandwidth part identity (BWP ID) and/or at least one component carrier identity (CC ID).

24. The method according to claim 23, wherein
in a case that the CC ID is a CC ID in a CC list, the second TCI state is applicable to all BWPs on all CCs in the CC list.

25. The method according to any one of claims 1 to 22, wherein
at least one BWP ID and/or at least one CC ID corresponding to the second TCI state indicated by the second indication information are the same as a BWP ID and/or a CC ID corresponding to the N TCI states indicated by the first indication information.

26. A method for indicating a transmission configuration indication (TCI) state, performed by an access network device, and comprising:
sending first indication information, wherein the first indication information is configured to indicate a first TCI state, the first TCI state comprises N TCI states, and the TCI state comprises a joint TCI state and/or an uplink TCI state, wherein N is an integer greater than 1; and
sending second indication information, wherein the second indication information is configured to indicate a second TCI state used in a case that a first physical uplink shared channel (PUSCH) is transmitted, and the second TCI state comprises M TCI states,
wherein the M TCI states are a subset of the N TCI states, and M is a positive integer not greater than N.

27. The method according to claim 26, wherein the first PUSCH is configured with at least one of:
a transmission scheme based on a frequency division multiplexing (FDM);
a transmission scheme based on a time division multiplexing (TDM);
demodulation reference signal (DMRS) ports of at least two code division multiplexing (CDM) groups; and
a transmission scheme based on a single-frequency network (SFN).

28. The method according to claim 27, wherein the transmission scheme based on the single-frequency network (SFN) comprises:
SFN scheme A; or
SFN scheme B.

29. The method according to claim 27, wherein the transmission scheme based on the time division multiplexing (TDM) comprises:
repetition type A; or
repetition type B.

30. The method according to claim 27, wherein the first PUSCH comprises at least one of following types:
a dynamic scheduled PUSCH;
a configured grant type 1 PUSCH; and
a configured grant type 2 PUSCH.

31. The method according to claim 27, wherein the first PUSCH is configured with at least one of:
at least one sounding reference signal (SRS) resource set indicator;
at least one SRS resource indicator;
at least one field layer;
at least one precoding information and number of layers;
at least one transmitted precoding matrix indicator (TPMI);
at least one SRS resource set;
at least one pathloss reference signal; and
at least one power control parameter set.

32. The method according to claim 27, wherein
different frequency domain resources of the first PUSCH correspond to different TCI states in a case that the first PUSCH is configured with the transmission scheme based on the FDM and M is an integer greater than 1 and not greater than N;
different time domain resources of the first PUSCH correspond to different TCI states in a case that the first PUSCH is configured with the transmission scheme based on the TDM and M is an integer greater than 1 and not greater than N;
DMRS ports of different CDM groups of the first PUSCH correspond to different TCI states in a case that the first PUSCH is configured with the demodulation reference signal (DMRS) ports of the at least two code division multiplexing (CDM) groups and M is an integer greater than 1 and not greater than N; and
DMRS ports of the first PUSCH correspond to the M TCI states in a case that the first PUSCH is configured with the transmission scheme based on the SFN and M is an integer greater than 1 and not greater than N.

33. The method according to claim 26, wherein
the first indication information is carried in a first medium access control control element (MAC CE), and the first MAC CE is configured to indicate the N TCI states; or
the first indication information is carried in a second MAC CE and first downlink control information (DCI), the second MAC CE is configured to indicate N TCI states corresponding to each of at least two code points, and the first DCI is configured to indicate one code point of the at least two code points.

34. The method according to claim 33, wherein
the first indication information comprises identification information (ID) corresponding to each TCI state, and the identification information comprises a control resource set pool index (CORESETPoolIndex) or a control resource set (CORESET) group ID or a search space set (SS set) group ID or a physical downlink control channel (PDCCH) group ID or a PUSCH group ID; or
the first indication information comprises the N TCI states, and each of the N TCI states has a default mapping relationship with identification information.

35. The method according to any one of claims 26 to 34, wherein
the second indication information is carried in a third MAC CE, and the third MAC CE is the same as or different from an MAC CE where the first indication information is located.

36. The method according to claim 35, wherein
the third MAC CE is configured to indicate the N TCI states and the M TCI states corresponding to the first PUSCH in a case that the third MAC CE is the same as the MAC CE where the first indication information is located.

37. The method according to claim 35, wherein the N TCI states have a corresponding relationship with a plurality of configuration parameters;
in a case that the third MAC CE indicates an i-th configuration parameter in the at least one configuration parameter, it is determined that the M TCI states corresponding to the first PUSCH comprise a TCI state corresponding to the i-th configuration parameter; or
in a case that at least two configuration parameters are provided and the third MAC CE indicates the at least two configuration parameters, it is determined that the M TCI states corresponding to the first PUSCH comprise TCI states corresponding to the at least two configuration parameters,
wherein i is a positive integer not greater than N, and the at least one configuration parameter comprises at least one of at least one SRS resource set indicator, at least one SRS resource indicator, at least one field layer, at least one precoding information and number of layers, at least one TPMI, at least one SRS resource set, at least one pathloss reference signal and at least one power control parameter set.

38. The method according to any one of claims 26 to 34, wherein
the second indication information is carried in a second DCI, and the second DCI is the same as or different from a DCI where the first indication information is located.

39. The method according to claim 38, wherein
the first indication information is carried in a DCI in a DCI format of 1_1 or 1_2 without a downlink assignment, and the second DCI is the DCI in the DCI format of 1_1 or 1_2 without the downlink assignment; or
the first indication information is carried in a DCI in a DCI format of 1_1 or 1_2 with or without a downlink assignment, and the second DCI is an uplink DCI in a DCI format of 0_1 or 0_2; or
the first indication information is carried in a DCI in a DCI format of 1_1 or 1_2 with or without a downlink assignment, and the second DCI is a DCI in a DCI format other than 1_1 and 1_2.

40. The method according to claim 39, wherein
a field used by the second indication information in the DCI in the DCI format of 1_1 or 1_2 without the downlink assignment comprises at least one of:
a frequency domain resource assignment;
a time domain resource assignment;
a virtual resource block to physical resource block mapping;
a physical resource block bundling size indicator;
a rate matching indicator;
a non-zero power channel state information reference signal (CSI-RS) triggering;
a hybrid automatic repeat request (HARQ) process number;
a downlink assignment index;
a transmit power control command for a scheduled physical uplink control channel (PUCCH);
a transmit power control command for a second scheduled PUCCH;
a PUCCH resource indicator;
a timing indicator from a physical downlink shared channel (PDSCH) to an HARQ feedback;
a one-shot hybrid automatic repeat request acknowledgement (HARQ-ACK) request;
an enhanced type 3 codebook indicator;
a PDSCH group index;
a new feedback indicator;
a number of requested PDSCH groups;
an HARQ-ACK retransmission indicator;
an antenna port;
a sounding reference signal (SRS) request;
an SRS offset indicator;
code block group (CBG) transmission information;
CBG flushing out information;
a demodulation reference signal (DMRS) sequence initialization;
a priority indicator;
a channel access-cyclic prefix (CP);
a minimum applicable scheduling offset indicator;
a secondary cell dormancy indication;
a PDCCH monitoring adaptation indication;
a physical uplink control channel (PUCCH) cell indicator;
a redundancy version;
a TCI state indication field;
an enhanced TCI state indication field; and
a second TCI state indication field.

41. The method according to claim 39, wherein
a field used by the second indication information in the uplink DCI in the DCI format of 0_1 or 0_2 comprises at least one of:
an SRS resource set indicator; and
a TCI state indication field.

42. The method according to claim 41, wherein
K repetitive resources corresponding to the first PUSCH use a first TCI state in a case that the SRS resource set indicator is a first value; or
K repetitive resources corresponding to the first PUSCH use a second TCI state in a case that the SRS resource set indicator is a second value; or
K repetitive resources corresponding to the first PUSCH use a first TCI state and a second TCI state in a case that the SRS resource set indicator is a third value,
wherein K is an integer greater than 1.

43. The method according to claim 41, wherein
K repetitive resources corresponding to the first PUSCH use at least one TCI state of the N TCI states in a case that the SRS resource set indicator is an i-th value,
wherein N is an integer greater than 2.

44. The method according to claim 43, wherein
in a case that the TCI states used by the K repetitive resources comprise at least two TCI states of the N TCI states, the at least two TCI states are used based on a mapping manner, and the mapping manner is a cyclic mapping or a sequential mapping.

45. The method according to claim 39, wherein
an SS set type associated with the second DCI is a user equipment specific SS set or a common SS set in a case that the second DCI is the DCI in the DCI format other than 1_1 and 1_2.

46. The method according to any one of claims 26 to 45, further comprising:
an MAC CE or a DCI where the second indication information is located being further configured to indicate a third TCI state of at least one channel, and the at least one channel comprising at least one of:
a physical uplink control channel (PUCCH);
a physical downlink shared channel (PDSCH); and
a physical downlink control channel (PDCCH).

47. The method according to claim 46, wherein
the third TCI state is a subset of the first TCI state in a case that the at least one channel comprises the PUCCH; or
in a case that the at least one channel comprises the PDCCH or the PDSCH, the first TCI state comprises N joint TCI states and/or downlink TCI states, and the third TCI state is a subset of the N joint TCI states and/or downlink TCI states.

48. The method according to any one of claims 26 to 47, wherein
the second indication information comprises at least one bandwidth part identity (BWP ID) and/or at least one component carrier identity (CC ID).

49. The method according to claim 48, wherein
in a case that the CC ID is a CC ID in a CC list, the second TCI state is applicable to all BWPs on all CCs in the CC list.

50. The method according to any one of claims 26 to 47, wherein
at least one BWP ID and/or at least one CC ID corresponding to the second TCI state indicated by the second indication information are the same as a BWP ID and/or a CC ID corresponding to the N TCI states indicated by the first indication information.

51. An apparatus for indicating a transmission configuration indication (TCI) state, comprising:
a first receiving module configured to receive first indication information, wherein the first indication information is configured to indicate a first TCI state, the first TCI state comprises N TCI states, and the TCI state comprises a joint TCI state and/or an uplink TCI state, wherein N is an integer greater than 1; and
a second receiving module configured to receive second indication information, wherein the second indication information is configured to indicate a second TCI state used in a case that a first physical uplink shared channel (PUSCH) is transmitted, and the second TCI state comprises M TCI states,
wherein the M TCI states are a subset of the N TCI states, and M is a positive integer not greater than N.

52. An apparatus for indicating a transmission configuration indication (TCI) state, comprising:
a first sending module configured to send first indication information, wherein the first indication information is configured to indicate a first TCI state, the first TCI state comprises N TCI states, and the TCI state comprises a joint TCI state and/or an uplink TCI state, wherein N is an integer greater than 1; and
a second sending module configured to send second indication information, wherein the second indication information is configured to indicate a second TCI state used in a case that a first physical uplink shared channel (PUSCH) is transmitted, and the second TCI state comprises M TCI states,
wherein the M TCI states are a subset of the N TCI states, and M is a positive integer not greater than N.

53. A terminal, comprising:
a processor; and
a transceiver connected to the processor,
wherein the processor is configured to load and execute executable instructions to implement a method for indicating a transmission configuration indication (TCI) state according to any one of claims 1 to 25.

54. An access network device, comprising:
a processor; and
a transceiver connected to the processor,
wherein the processor is configured to load and execute executable instructions to implement a method for indicating a transmission configuration indication (TCI) state according to any one of claims 26 to 50.

55. A computer-readable storage medium, storing at least one instruction, at least one program, a code set or an instruction set, wherein the at least one instruction, the at least one program, the code set or the instruction set is loaded and executed by a processor to implement a method for indicating a transmission configuration indication (TCI) state according to any one of claims 1 to 25, or, to implement a method for indicating a TCI state according to any one of claims 26 to 50.
